# EUROPÄISCHE PATENTSCHRIFT

(11) **EP 0 654 182 B1**
(45) Veröffentlichungstag und Bekanntmachung des Hinweises auf die Patenterteilung: **27.03.1996**
(21) Anmeldenummer: 92917913.3
(22) Anmeldetag: 10.08.1992
(51) Int. Cl.: H01M 8/04

(54) **BRENNSTOFFZELLE UND VERFAHREN ZUR BEFEUCHTUNG DES ELEKTROLYTEN**
FUEL CELL AND ELECTROLYTE MOISTENING PROCESS
PILE A COMBUSTIBLE ET PROCEDE D'HUMIDIFICATION DE L'ELECTROLYTE

(43) Veröffentlichungstag der Anmeldung: 24.05.1995
(73) Patentinhaber: SIEMENS AKTIENGESELLSCHAFT, D-80333 München (DE)
(72) Erfinder: STRASSER, Karl, D-8520 Erlangen (DE)
(86) Internationale Anmeldenummer: DE9200661
(87) Internationale Veröffentlichungsnummer: WO9403937

(56) Entgegenhaltungen:
- WO-A-92/13365
- DE-A- 4 021 097
- DE-B- 2 533 215
- US-A- 4 362 789
- US-A- 4 859 545

## Beschreibung

### Brennstoffzelle und Verfahren zur Befeuchtung des Elektrolyten

Die Erfindung bezieht sich auf eine Brennstoffzelle, insbesondere eine PEM-Brennstoffzelle, und ein Verfahren zur Befeuchtung des Elektrolyten der Brennstoffzelle.

Eine Brennstoffzelle besteht im allgemeinen aus einer elektrisch leitenden Stromübertragerplatte, einer Kathode, einer ionenleitenden Zwischenschicht, einer Anode und einer weiteren elektrisch leitenden Stromübertragerplatte, die in der genannten Reihenfolge als ebene Platten aufeinandergestapelt sind. Brennstoffzellen dieses Aufbaus sind unter anderem durch das "Fuel Cell Handbook" von Appleby and Foulkes, New York, 1989, sowie durch den Aufsatz von K. Strasser "Brennstoffzellen für Elektrotraktion", VDI-Berichte Nr. 912, 1992, Seiten 125 bis 145, vorbekannt. Weil die Brennstoffzelle chemisch gebundene Energie unmittelbar in elektrische Energie umsetzen kann, ermöglicht sie es, Brennstoffe, wie z.B. Wasserstoff, Erdgas, Biogas, mit höherem Wirkungsgrad und mit geringerer Belastung für die Umwelt in elektrische Energie umzuwandeln, als es die bisher bekannten konventionellen Wärmekraftwerke, deren Wirkungsgrad durch den sogenannten Carnot' schen Prozeß begrenzt ist, zu tun vermögen.

Den vorgenannten Druckschriften zufolge wird im Zusammenhang mit einem elektrischen Antrieb eine Polymer-Elektrolyt-Membran-Brennstoffzelle (PEM-Brennstoffzelle) favorisiert. Dieser Brennstoffzellentyp kann sowohl mit technisch reinen Gasen als auch mit CO₂-haltigen Gasen und Luft betrieben werden. Besonders vorteilhaft für die Anwendung in einem Fahrzeug sind beispielsweise die niedrige Betriebstemperatur (< 100° C), die hohe Leistungsdichte, das günstige Langzeitverhalten sowie das Fehlen eines korrosiven, flüssigen Elektrolyten. Korrosive flüssige Elektrolyte werden beispielsweise in der sauern oder alkalischen Brennstoffzelle eingesetzt.

Ein besonderes Problem bei den genannten Brennstoffzellen stellt die Wasserbilanz im Elektrolyten beim Betrieb der Brennstoffzellen dar. Mit dem Wassergehalt in der Brennstoffzelle, und im besonderen im Elektrolyten, ist die Funktionsfähigkeit der Brennstoffzelle eng verbunden. Ein zu hoher Wassergehalt im Elektrolyten führt infolge seiner zu hohen Verdünnung zu einem Rückgang der verfügbaren Leistung der Brennstoffzelle. Ein zu geringer Wassergehalt des Elektrolyten führt ebenfalls zu einem Rückgang der elektrischen Leistung der Brennstoffzelle durch Erhöhung des Innenwiderstandes. Darüber hinaus kann es bereits bei partieller Austrocknung des Elektrolyten zu einem Gasdurchbruch und damit zur Bildung brennbarer Gasgemische kommen. Im schlimmsten Fall führt dies beim Abbrennen des Gasgegemisches zur Beschädigung oder Zerstörung der Brennstoffzelle.

Zur Einstellung des Wassergehaltes des Elektrolyten in einer sauren oder alkalischen Brennstoffzelle ist daher bereits eine relativ aufwendige Verdampfer-Kondensator-Anordnung vorgeschlagen worden, bei der zumindest eines der in die Brennstoffzelle einströmenden Gase zum Wasserdampftransport eingesetzt und zu diesem Zweck auch über eine temperierte Wasseroberfläche geleitet wird.

Eine PEM-Brennstoffzelle, die vorzugsweise mit Wasserstoff und Luft betrieben wird, benötigt eine Verdampfer-Anordnung zur Einstellung des Wassergehaltes in der protonenleitenden Membran. Die Verdampfer-Anordnung muß hinsichtlich ihrer Dimensionierung an den niedrigsten Systemdruck angepaßt sein, weil in diesem Fall bei konstanter Temperatur die größten Volumenströme zu befeuchten sind und somit die größten Stoffaustauschflächen erforderlich sind. Bei der Verwendung einer solchen Verdampfer-Anordnung sind als Nachteile das relativ große Bauvolumen, das die Größe des eigentlichen Brennstoffzellenblocks erreichen kann und die damit verbundenen hohen Investitionskosten in Kauf zu nehmen. Diese Nachteile sind bei dem Einsatz einer PEM-Brennstoffzelle so gravierend, daß sie dem Einsatz, insbesondere dem mobilen Einsatz, und damit einer breiteren Anwendung solcher Brennstoffzellen entgegenstehen.

Der Erfindung liegt daher die Aufgabe zugrunde, eine Niedertemperatur-Brennstoffzelle, insbesondere eine PEM-Brennstoffzelle, und ein Verfahren zur Befeuchtung des Elektrolyten anzugeben, die es erlauben, die genannten Nachteile so weit zu vermeiden, daß ein Einsatz insbesondere der PEM-Brennstoffzelle unter wirtschaftlichen Gesichtspunkten erfolgen kann.

Bezüglich des Verfahrens wird diese Aufgabe dadurch gelöst, daß kathodenseitig anfallendes Abgas der Niedertemperatur-Brennstoffzelle zumindest teilweise in die Kathode der Niedertemperatur-Brennstoffzelle rezirkuliert wird, wobei der mittels eines Einstellglieds rezirkulierte Teil des Abgases proportional zur Leistungsabgabe der Niedertemperatur-Brennstoffzelle eingestellt wird.

Unter Niedertemperatur-Brennstoffzellen werden Polymer-Elektrolyte-Membran-, saure und alkalische Brennstoffzellen verstanden. Nachfolgend wird jedoch von der PEM-Brennstoffzelle gesprochen, ohne dabei die anderen beiden vorstehend genannten Typen auszuschließen.

Hierdurch wird ein Teil des bei der elektrochemischen Reaktion in der Brennstoffzelle entstehenden Wassers (Produktwasser) zunächst mit dem übrigen Abgas von der Kathode der PEM-Brennstoffzelle weggeführt und dann zumindest teilweise in die Kathode der PEM-Brennstoffzelle rezirkuliert, wodurch der Befeuchtungsgrad des in die Kathode einströmenden Oxidationsmittels angehoben wird und eine bessere Befeuchtung des Elektrolyten der PEM-Brennstoffzelle gewährleistet wird. Unter der Zufuhr des Oxidationsmittels zur Kathode der PEM-Brennstoffzelle wird hierbei neben der Zufuhr des Luftsauerstoffs der Umgebungsluft auch alternativ die Zufuhr von technisch reinem Sauerstoff verstanden.

Bezüglich der Niedertemperatur-Brennstoffzelle wird diese Aufgabe erfindungsgemäß dadurch gelöst, daß an eine kathodenseitig an der Niedertemperatur-Brennstoffzelle angeschlossene Abgasleitung eine Rezirkulationsleitung angeschlossen ist, über die zumindest ein Teil der Niedertemperatur-Brennstoffzelle rezirkulierbar ist, wobei der Rezirkulationsleitung ein Einstellglied zugeordnet ist, und wobei der rezirkulierte Teil des Abgases mittels des Einstellgliedes proportional zur Leistungsabgabe der Niedertemperatur-Brennstoffzelle eingestellt wird.

Hierdurch ist es möglich, daß ein Teil des aus der Kathode der PEM-Brennstoffzelle ausgetragenen Wassers und der Wärme wieder in die Kathode zurückgeführt wird. Mittels des Einstellgliedes ist der rezirkulierte Teil des Abgases einstellbar. Die Leistungsabgabe der Brennstoffzelle kann einfach durch Strom- und Spannungsmessung ermittelt werden, wobei mit steigender Leistungsabgabe der Brennstoffzelle auch der Stoffumsatz der Brennstoffzelle proportional zur Leistungsabgabe ansteigt. Mit dem Einstellglied kann der rezirkulierte Teil des Abgases entsprechend eingestellt werden. Auf diese Weise wird es erreicht, daß jederzeit ein für den störungsfreien Betrieb der PEM-Brennstoffzelle bevorzugter Befeuchtungsgrad der Polymer-Elektrolyt-Membran (PEM) vorherrscht.

Um den rezirkulierten Teil des Abgases wieder auf den kathodenseitigen Eintrittsluftdruck zu verdichten, ist es vorteilhaft, wenn die Rezirkulationsleitung über einen Gasverdichter in eine kathodenseitig angeschlossene Luftzuführungsleitung mündet. Dabei hat der Gasverdichter nur einen relativ kleinen Druckunterschied zwischen Kathodenein- und Austritt auszugleichen und relativ kleine Luftmengen zu verdichten.

Zwei Ausführungsbeispiele der Erfindung werden anhand einer Zeichnung näher erläutert. Dabei zeigen:
- Figur 1: eine schematische Darstellung einer erfindungsgemäßen PEM-Brennstoffzelle mit einer Rezirkulationsleitung für kathodenseitig anfallendes Abgas der Brennstoffzelle, und
- Figur 2: einen Ausschnitt der gegenüber Figur 1 abgewandelten Einmündung der Rezirkulationsleitung in die Luftzuführungsleitung.

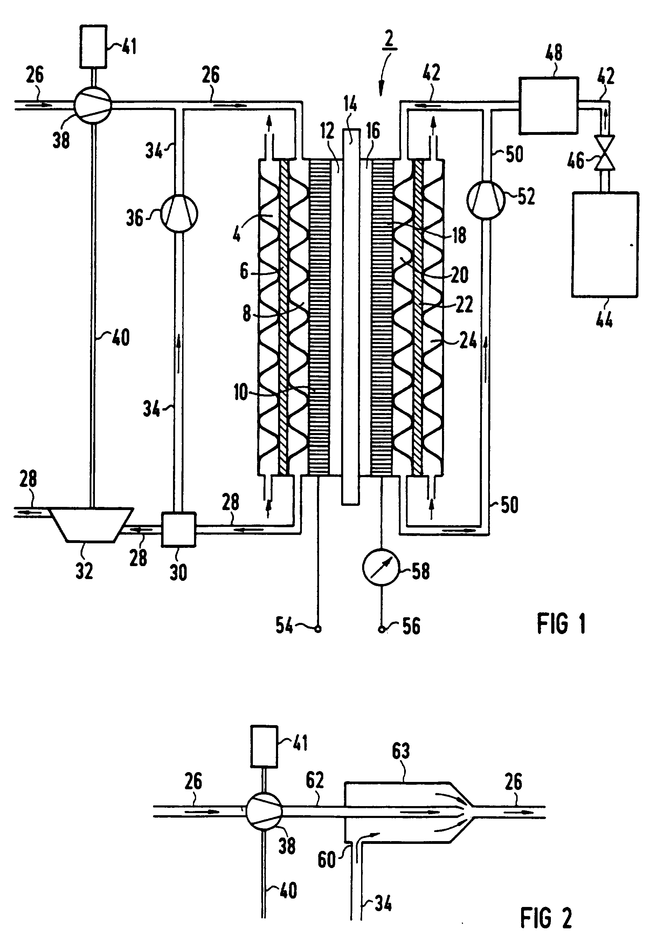

Die in Figur 1 schematisch dargestellte Brennstoffzelle 2 umfaßt einen Kühlraum 4, einen kühlwasserseitigen Abstandhalter 6, einen Luftgasraum 8, eine kathodenseitige Platte aus Kohlepapier 10, eine Platinkathode 12, eine PEM-Membran 14 (im Handel z.B. unter dem Namen "Nafion 117" erhältlich), eine Platinanode 16, eine anodenseitige Platte 18 aus Kohlepapier, einen Wasserstoffgasraum 20, einen kühlwasserseitigen Abstandshalter 22 und einen Kühlraum 24, die in dieser Reihenfolge als ebene Platten aufeinandergestapelt sind. Der kathodenseitige Kühlraum 4 und der anodenseitige Kühlraum 24 sind an einen nicht weiter dargestellten Kühlwasserkreislauf anschließbar. An den Luftgasraum 8 ist eingangsseitig eine Luftzuführungsleitung 26 und ausgangsseitig eine Abgasleitung 28 angeschlossen, wobei letztere über ein Einstellglied 30 und eine Entspannungsturbine 32 ins Freie führt. An das Einstellglied 30 ist eine Rezirkulationsleitung 34 angeschlossen, die über einen Gasverdichter 36 in die Luftzuführungsleitung 26 mündet. In Strömungsrichtung der Luft vor der Einmündung der Rezirkulationsleitung 34 in die Luftzuführungsleitung 26 ist in der Luftzuführungsleitung 26 ein Luftverdichter 38 angeschlossen. Ein Teil der Antriebsleistung des gasverdichters 36 und des Luftverdichters 38 wird über eine hier nur schematisch angedeutete Verbindung 40 von der Abgasentspannungsturbine 32 aufgebracht. Die restliche Antriebsleistung muß von einem hier nicht weiter dargestellten Motor 41 bereitgestellt werden.

An den Wasserstoffgasraum 20 ist eingangsseitig eine Wasserstoffzuführungsleitung 42 angeschlossen. Diese führt von einer Wasserstoffquelle 44 über ein Ventil 46 und einen Gasbefeuchter 48 in den Wasserstoffgasraum 20. Ausgangsseitig ist an den Wasserstoffraum 20 eine Rückführungsleitung 50 für Wasserstoff angeschlossen, die über einen Gasverdichter 52 zwischen dem Luftbefeuchter 48 und dem Wasserstoffgasraum 20 in die Wasserstoffzuführungsleitung 42 mündet.

Beim Betrieb der Brennstoffzelle 2 wird im Ausführungsbeispiel der Wasserstoffgasraum 20 mit einem Wasserstoffpartialdruck von etwa 2 bar beaufschlagt. Mittels des Gasverdichters 36 und des Luftver-dichters 38 wird der Luftgasraum 8 mit Luft beaufschlagt, wobei der statische Luftdruck im Ausführungsbeispiel etwa 1,3 - 4 bar a beträgt. In der Kathode werden die Luftsauerstoffmoleküle jeweils unter Aufnahme von vier Elektronen katalytisch in zwei zweifach negativ geladene Sauerstoffionen umgesetzt. Die Sauerstoffionen gelangen an die Grenzschicht zwischen Kathode 12 und PEM 14. Die zur Reduktion des Sauerstoffs benötigten Elektronen werden katalytisch in der Anode erzeugt, an der jeweils zwei Wasserstoffmoleküle in vier Wasserstoffionen und vier Elektronen aufgespalten werden.

Dabei liegt an einer an der kathodenseitigen Kohlepapierplatte 10 angeschlossenen Kontakt 54 und an einem an der anodenseitigen Kohlepapierplatte 18 angeschlossene Kontakt 56 eine Spannung U_{BZ} von etwa 0,5 - 1 V an, je nach eingestelltem Laststrom.

Wird zwischen die Kontakte 54 und 56 ein elektrischer Verbraucher geschaltet, fließen die in der Anode freiwerdenden Elektronen über ein Amperemeter 58 und einen nicht weiter dargestellten externen elektrischen Verbraucher zur Kathode 12. Die Brennstoffzelle 2 nimmt dann ihren bestimmungsgemäßen Betrieb auf und erreicht dabei eine spezifische Leistung bis ca. 700 mW/cm sowie eine Stromdichte von 1000 mA/cm. Die Arbeitstemperatur liegt dabei bei etwa 80°C. Das über die Wasserstoffzuführungsleitung 42 der Anode 16 zuströmende, zuvor in den Gasbefeuchter 48 geleitete und dort befeuchtete Wasserstoffgas wird zu einem Teil in der Brennstoffzelle unter Freisetzung der Elektronen und anschließender Bildung von Wasser verbraucht. Da dieses Wasser, auch Produktwasser genannt, fast ausschließlich an der Grenzfläche zwischen Kathode 12 und PEM 14 gebildet wird, wird der nicht verbrauchte Teil des Wasserstoffgases in die Wasserstoffrückführungsleitung 50 eingeleitet. Das mit dem Produktwasser befeuchtete Wasserstoffgas wird anschließend über den Gasverdichter 52 wieder in die Wasserstoffzuführungsleitung 50 geführt und verhindert durch seine nachfolgende Einleitung in die Anode 16 ein Austrocknen der PEM 14 an der Grenzschicht PEM 14 - Anode 16. Der verbrauchte Teil des Wasserstoff gases wird dabei aus der Wasserstoffquelle 44 ergänzt und mittels des Gasbefeuchters 48 befeuchtet. Der Gasbefeuchter 48 kann mit Kondenswasser versorgt werden, das in hier nicht weiter dargestellter Weise aus dem kathodenseitigen Abgas gewonnen wird.

Das kathodenseitig entstehende Produktwasser wird mit dem Luftstrom aus dem Luftgasraum 8 unter Einleitung in die Abgasleitung 28 aus der Brennstoffzelle 2 entfernt. In Abhängigkeit von der abgegebenen Leistung der Brennstoffzelle wird mittels des Einstellgliedes 30 ein Teil des Abgases in die Rezirkulationsleitung 34 eingeleitet und von dort über den Gasverdichter 36 wieder in die Luftzuführungsleitung 26 eingespeist. Hierdurch wird auch ein Teil des bei der elektrochemischen Reaktion an der Grenzschicht Kathode 12 - PEM 14 entstehenden Wassers in die Kathode 12 rezirkuliert, wodurch ein Austrocknen der PEM 14 und damit eine Funktionsstörung der Brennstoffzelle 2 vermieden wird. Die rezirkulierte Luftmenge beträgt bei Vollast der Brennstoffzelle 2 etwa die Hälfte der Abgasluftmenge. Damit ist auch eine ausreichende Befeuchtung der PEM 14 auf der Seite der Kathode 12 gewährleistet.

Bei einem erforderlichen Luftverhältnis m ≥ 2,5 und bei der Rückführung der halben Abluftmenge erhöht sich die insgesamt durch den Luftgasraum beförderte Luftmenge um etwa 20% und damit der Druckabfall im Luftweg durch die Brennstoffzelle 2 und folglich auch der Leistungsbedarf für die Luftkompression. Das Luftverhältnis m ist dabei definiert als das Verhältnis der Sauerstoffmenge in der Luft zum Sauerstoffbedarf (stöchiometrisch). Hinzu kommt auch noch der Leistungsbedarf des Gasverdichters 36 für die rezirkulierte Abgasmenge, wobei der Gasverdichter 36 nur eine geringe Luftdruckdifferenz auszugleichen hat, um das rezirkulierte Abgas wieder auf den Eingangsluftdruck des Luftgasraums 8 zu verdichten. Ein Teil der vom Luftverdichter 38 aufgenommenen Leistung wird dabei mittels der von der übrigen Abgasmenge betriebenen Abgasentspannungsturbine 32 aufgebracht.

Ohne diese Rezirkulation der Abgasluft wäre dem Luftverdichter 38 ein hier nicht dargestellter Gasbefeuchter vorzuschalten, um ein kathodenseitiges Austrocknen der PEM zu vermeiden. Hierbei hat die Dimensionierung dieses sogenannten Membran-Befeuchters nach dem niedrigsten Systemdruck, d.h. angepaßt an die größtmögliche Luftmenge, zu erfolgen. Ein solcher Membranbefeuchter ist technisch realisierbar, besitzt aber ein Vielfaches des Volumens einer Stapelanordnung von Brennstoffzellen 2 und einen relativ hohen Herstellungspreis. Damit würden die Nachteile, die mit dem Einsatz eines Membranbefeuchters verbunden sind, der Verwendung einer PEM-Brennstoffzelle 2 entgegenstehen.

Die Figur 2 zeigt eine alternative Möglichkeit, die rezirkulierte Luft in die Luftzuführungsleitung 26 einzuleiten und dabei die Druckdifferenz auszugleichen. Hierzu wird an der Einmündungsstelle für die Rezirkulationsleitung 34 ein Luftstrahlverdichter 63 so eingebaut, daß sein Ansaugstutzen 60 an die Rezirkulationsleitung 34 und sein Druckluftzuführstutzen 62 an den Luftverdichter 38 angeschlossen wird. Hierdurch wird erreicht, daß durch die der Brennstoffzelle 2 zuströmenden, verdichteten Luft das rezirkulierte Gasgemisch entsprechend der momentanen Einstellung des Einstellglieds 30 angesaugt wird.

Durch die erfindungsgemäße Rezirkulation von kathodenseitig anfallendem Abgas wird mit geringem Aufwand ein voluminöser und kostspieliger Luftbefeuchter eingespart und damit eine Voraussetzung geschaffen, die Herstellungskosten für Brennstoffzellen 2 auf der Basis einer PEM 14 zu verringern.

Ein gegenüber der Figur 1 nur gering veränderter Aufbau kann auch bei einer alkalischen oder einer sauren Brennstoffzelle den Einsatz von separaten Luftbefeuchtern auf der Kathodenseite der Brennstoffzelle einsparen. Insgesamt würden die erfindungsgemäß vorgeschlagenen Maßnahmen auch bei diesen Brennstoffzellen zu einer Verbesserung des Gesamtwirkungsgrads der Brennstoffzelle führen. Der Gesamtwirkungsgrad des in Figur 1 beschriebenen Ausführungsbeispiels liegt im Teillastbetrieb, z.B. bei einem Lastfaktor von 20%, bei über 60%.

## Patentansprüche

1. Verfahren zur Befeuchtung des Elektrolyten einer Polymer-Elektrolyt-Membran-Brennstoffzelle (PEM-Brennstoffzelle), **dadurch gekennzeichnet,** daß kathodenseitig anfallendes Abgas der Brennstoffzelle (2) zumindest teilweise in die Kathode (12) der Brennstoffzelle (2) rezirkuliert wird, wobei der mittels eines Einstellglieds (30) rezirkulierte Teil des Abgases proportional zur Leistungsabgabe der Brennstoffzelle (2) eingestellt wird.

2. Polymerelektrolyt-Membran-Brennstoffzelle zur Durchführung des Verfahrens nach Anspruch 1, **dadurch gekennzeichnet,** daß an eine kathodenseitig an der Brennstoffzelle (2) angeschlossene Abgasleitung (28) eine Rezirkulationsleitung (34) angeschlossen ist, über die zumindest ein Teil des kathodenseitig anfallenden Abgases in die Kathode (12) der Brennstoffzelle (2) rezirkulierbar ist, wobei der Rezirkulationsleitung (34) ein Einstellglied (30) zugeordnet ist, und wobei der mittels des Einstellglieds (30) rezirkulierte Teil des Abgases proportional zur Leistungsabgabe der Brennstoffzelle (2) einstellbar ist.

3. Polymerelektrolyt-Membran-Brennstoffzelle nach Anspruch 2, **dadurch gekennzeichnet,** daß die Rezirkulationsleitung (34) über einen Gasverdichter (36) in eine kathodenseitig angeschlossene Luftzuführungsleitung (26) mündet.

4. Polymerelektrolyt-Membran-Brennstoffzelle nach Anspruch 3, **dadurch gekennzeichnet,** daß in der Luftzuführungsleitung (26) in Strömungsrichtung der Luft vor der Einmündung der Rezirkulationsleitung (34) ein Luftverdichter (38) eingebaut ist.

5. Polymerelektrolyt-Membran-Brennstoffzelle nach Anspruch 2, **dadurch gekennzeichnet,** daß in der Luftzuführungsleitung in Strömungsrichtung der Luft nach der Einmündung der Rezirkulationsleitung ein Gasverdichter und vor der Einmündung eine Drosselstelle eingebaut ist.

6. Polymerelektrolyt-Membran-Brennstoffzelle nach Anspruch 2, **dadurch gekennzeichnet,** daß die Rezirkulationsleitung (34) in den Ansaugstutzen (60) eines Luftstrahlverdichters (63) mündet, der von einem in der Luftzuführungsleitung (26) angeschlossenen Luftverdichter (38) mit Druckluft versorgbar ist und an der Brennstoffzelle (2) kathodenseitig angeschlossen ist.

## Claims

1. Method for moistening the electrolyte of a polymer-electrolyte membrane fuel cell (PEM fuel cell), characterized in that the exhaust gas, which occurs on the cathode side, of the fuel cell (2) is at least partially recirculated into the cathode (12) of the fuel cell (2), the part of the exhaust gas which is recirculated by means of an adjusting element (30) being set in proportion to the power output from the fuel cell (2).

2. Polymer-electrolyte membrane fuel cell for carrying out the method according to Claim 1, characterized in that a recirculation line (34) is connected to an exhaust-gas line (28) which is connected on the cathode side to the fuel cell (2), via which recirculation line at least a part of the exhaust gas which occurs on the cathode side can be recirculated into the cathode (12) of the fuel cell (2), the recirculation line (34) being assigned an adjusting element (30), and the part of the exhaust gas which is recirculated by means of the adjusting element (30) being adjustable in proportion to the power output from the fuel cell (2).

3. Polymer-electrolyte membrane fuel cell according to Claim 2, characterized in that the recirculation line (34) opens via a gas compressor (36) into an air supply line (26) which is connected on the cathode side.

4. Polymer-electrolyte membrane fuel cell according to Claim 3, characterized in that an air compressor (38) is installed in the air supply line (26), in front of the opening of the recirculation line (34) in the flow direction of the air.

5. Polymer-electrolyte membrane fuel cell according to Claim 2, characterized in that a gas compressor is installed in the air supply line after the opening of the recirculation line in the flow direction of the air, and a restriction point is installed in front of the opening.

6. Polymer-electrolyte membrane fuel cell according to Claim 2, characterized in that the recirculation line (34) opens into the induction connecting piece (60) of an air jet compressor (63) which can be supplied with compressed air from an air compressor (38) connected in the air supply line (26), and is connected on the cathode side to the fuel cell (2).

## Revendications

1. Procédé d'humidification de l'électrolyte d'une pile à combustible du type à membrane en polymère et électrolyte (pile à combustible PEM), caractérisé par le fait que l'effluent gazeux, qui se forme du côté de la cathode de la pile à combustible (2), est renvoyé, au moins en partie, à la cathode (12) de la pile à combustible (2), la partie de l'effluent gazeux renvoyée étant réglée, à l'aide d'un élément de réglage (30), proportionnellement à la puissance fournie par la pile à combustible (2).

2. Pile à combustible à membrane en polymère et électrolyte, pour la mise en oeuvre du procédé selon la revendication 1, caractérisée par le fait qu'avec une conduite (28) de sortie des gaz, qui communique, côté cathode, avec la pile à combustible (2), communique une conduite de renvoi (34) par l'intermédiaire de laquelle au moins une partie des gaz se forment côté cathode, peut être renvoyée à la cathode (12) de la pile à combustible (2), un organe de réglage (30) étant associé à la conduite de renvoi (34), alors que la partie du gaz de sortie qui est renvoyée à l'aide de l'organe de réglage (30), peut être réglée proportionnellement à la puissance fournie par la pile à combustible (2).

3. Pile à combustible à membrane en polymère et électrolyte selon la revendication 2, caractérisée par le fait que la conduite de renvoi (34) débouche par l'intermédiaire d'un compresseur à gaz (36), dans une conduite d'admission d'air (26), qui est raccordée côté cathode.

4. Pile à combustible à membrane en polymère et électrolyte selon la revendication 3, caractérisée par le fait qu'un compresseur d'air (38) est monté dans la conduite d'admission de l'air (26) en amont, dans le sens de l'écoulement de l'air, de l'embouchure de la conduite de renvoi (34).

5. Pile à combustible à membrane en polymère et électrolyte selon la revendication 2, caractérisée par le fait qu'il est monté dans la conduite d'alimentation en air et en aval, dans le sens de l'écoulement de l'air, de l'embouchure de la conduite de recirculation, un compresseur à gaz, alors qu'en amont de l'embouchure est prévu un point d'étranglement.

6. Pile à combustible à membrane en polymère et électrolyte selon la revendication 2, caractérisée par le fait que la conduite de renvoi (34) débouche dans la tubulure d'aspiration (60), d'un compresseur d'air (63), qui peut être alimenté en air comprimé par un compresseur à air (38) relié à la conduite d'admission de l'air (26), tout en communiquant avec la pile à combustible (2), du côté de la cathode.
